# EUROPÄISCHE PATENTSCHRIFT

(11) **EP 3 539 308 B1**
(45) Veröffentlichungstag und Bekanntmachung des Hinweises auf die Patenterteilung: **06.01.2021**
(21) Anmeldenummer: 17792088.1
(22) Anmeldetag: 02.11.2017
(51) Int. Cl.: H04W 4/08

(54) **VERFAHREN ZUR DATENÜBERTRAGUNG IN EINEM FAHRZEUG-KOMMUNIKATIONSNETZWERK, FAHRZEUG-KOMMUNIKATIONSNETZWERK, TEILNEHMER UND FAHRZEUG**
METHOD FOR TRANSMITTING DATA IN A VEHICLE COMMUNICATION NETWORK, VEHICLE COMMUNICATION NETWORK, PARTICIPANT, AND VEHICLE
PROCÉDÉ DE TRANSMISSION DE DONNÉES DANS UN RÉSEAU DE COMMUNICATION DE VÉHICULE, RÉSEAU DE COMMUNICATION DE VÉHICULE, UTILISATEUR ET VÉHICULE

(30) Priorität: 09.11.2016 DE 102016221985
(43) Veröffentlichungstag der Anmeldung: 18.09.2019
(73) Patentinhaber: Volkswagen Aktiengesellschaft, 38440 Wolfsburg (DE)
(72) Erfinder: BARTSCH, Patrick, 38442 Wolfsburg (DE); WUSCHKE, Martin, 38527 Meine (DE)
(86) Internationale Anmeldenummer: PCT/EP2017/078069
(87) Internationale Veröffentlichungsnummer: WO 2018/099683

(56) Entgegenhaltungen:
- DE-A1-102015 207 483
- DE-B3-102015 200 947
- GOPU G L ET AL: "Service Oriented Architecture based connectivity of automotive ECUs", 2016 INTERNATIONAL CONFERENCE ON CIRCUIT, POWER AND COMPUTING TECHNOLOGIES (ICCPCT), IEEE, 18. März 2016 (2016-03-18), Seiten 1-4, XP032934329, DOI: 10.1109/ICCPCT.2016.7530358 [gefunden am 2016-08-02]

## Beschreibung

Die Erfindung betrifft ein Verfahren zur Datenübertragung in einem Fahrzeug-Kommunikationsnetzwerk und ein Fahrzeug-Kommunikationsnetzwerk sowie einen Teilnehmer des Fahrzeug-Kommunikationsnetzwerks und ein Fahrzeug.
In Fahrzeugen sind in der Regel eine Vielzahl von Steuergeräten vorhanden, die z.B. verschiedene Dienste bereitstellen oder bereitgestellte Dienste, z.B. Multimedia-Dienste oder Infotainment-Dienste, nutzen können. Hierzu ist eine Datenübertragung zwischen den Steuergeräten notwendig. Diese Datenübertragung erfolgt in der Regel über ein Fahrzeug-Kommunikationsnetzwerk.

Mit dem Fortschritt der Elektronik, Steuerungs- und Kommunikationstechnik sind in vielen Arten von Fahrzeugen, insbesondere Kraftfahrzeugen, neben einer rein mechanischen oder elektromechanischen Ausstattung Systeme vorhanden, in denen meist eine Vielzahl von Steuergeräten einschließlich Multimedia- und Infotainment-Geräten vorhanden ist. Diese Geräte kommunizieren in der Regel untereinander. Für die Implementierung solcher Kommunikationsverbindungen sind insbesondere verschiedene Bussysteme und Bordnetzsysteme bekannt, wie beispielsweise solche gemäß dem CAN - Controller Area Network - Standard (ISO 11898), dem Flexray-Standard (ISO 17458-1 bis 17458-5), dem LIN - Local Interconnect Network - De-facto Standard, oder dem MOST - Media Oriented Systems Transport - De-facto Standard für Multimedia- und Infotainment-Netzwerke in der Automobilindustrie.

Daneben sind aus dem Bereich der Computertechnik und Netzwerktechnik auch weitere Kommunikationsnetzwerktechniken bekannt, insbesondere Ethernet und die dem Internet zugrundeliegenden IP - Internet Protokoll -Kommunikation mittels Datenpaketen (IP-Paketen). Dabei ist die Internet-Technologie vor allem in so genannten RFC-Standards spezifiziert, wozu insbesondere auch die Standards RFC 2663, RFC2766 (NAT - Network Address Translation) und RFC 3022 (PAT - Port Address Translation) gehören, welche eine automatisierte Umsetzung von Adress- bzw. Portinformationen in Datenpaketen zur Verbindung verschiedener Netze spezifizieren. Diese genannten Standards und Protokolldefinitionen sind aus den Bedürfnissen hochkomplexer und dynamischer Computer- und Kommunikationsnetzwerke entstanden, wie sie in der ITK - Informations- und Telekommunikationsindustrie - oft erforderlich sind.

Inzwischen hat die Verwendung von Ethernet-basierter Kommunikationstechnik auch in Fahrzeugen Einzug gehalten. Ein Beispiel dafür ist das von einem Konsortium von Fahrzeugherstellern entwickelte Kommunikationsprotokoll "SOME/IP" einschließlich "SOME/IP-Service Discovery", das auch in den AUTOSAR-Standard (insbesondere Release 4.1) aufgenommen wurde und eine Lösung für Paket-über-Ethernet-basierte Bordnetz-Kommunikation im Fahrzeug spezifiziert. Dabei werden mittels Ethernet-Kommunikation (Schicht 2 im OSI/ISO Schichtenmodell) TCP/IP-Pakete (Schichten 3 und 4 im OSI/ISO Schichtenmodell) im Sinne von IP-über-Ethernet Kommunikation übermittelt.

Darüber hinaus ist es bekannt, bei der Entwicklung von neuen oder Nachfolgefahrzeugmodellen so weit als möglich auf bereits im Vorgängermodell verfügbare Systeme und Lösungen zurückzugreifen, um eine unnötige Neuentwicklung zu vermeiden. Eine solche Wiederverwendung von Vorgängersystemen kann jedoch dann scheitern, wenn im neuen Fahrzeug zusätzliche Optionen oder Kommunikationsverbindungen erforderlich werden, für die das Vorgängersystem nicht ausgelegt ist und auf die es nicht einfach im Sinne einer Skalierung erweitert werden kann.

Problematisch ist somit eine mangelnde Flexibilität von Fahrzeug-Kommunikationsnetzwerken, insbesondere hinsichtlich der nachträglichen oder temporären Einbindung weiterer Teilnehmer und/oder der Dienste, die von Teilnehmern nachträglich oder temporär bereitgestellt werden. Auch ist die Einbindung fahrzeugexterner Teilnehmer, beispielsweise von mobilen Endgeräten oder fahrzeugexternen Servereinrichtungen, nicht oder nur mit großem Aufwand möglich.

Die DE 10 2015 200 947 B3 betrifft eine Paketvermittlungsvorrichtung für ein Paket-über-Ethernet-basiertes Kommunikationsnetzwerk in einem Fahrzeug, insbesondere einem Kraftfahrzeug.

Die DE 10 2014 201 954 A1 betrifft ein Verfahren zur Datenübertragung zwischen mindestens zwei Teilnehmern, wobei mindestens einer der Teilnehmer als ein fahrzeugseitiger Teilnehmer ausgebildet ist, wobei der mindestens eine fahrzeugseitige Teilnehmer mindestens eine virtuelle Maschine bereitstellt oder als virtuelle Maschine ausgebildet ist, wobei mindestens ein weiterer Teilnehmer persistente Daten an die mindestens eine virtuelle Maschine überträgt, sowie ein Kommunikationsnetzwerk und ein Fahrzeug.

Die DE 10 2014 201 948 A1 betrifft ein Verfahren zur Datenübertragung zwischen mindestens zwei Teilnehmern in einem Fahrzeug, wobei ein erster Teilnehmer einen Server in einem Client-Server-Kommunikationsnetzwerk bildet, wobei mindestens ein weiterer Teilnehmer einen Client in dem Client-Server-Kommunikationsnetzwerk bildet, wobei mittels der Datenübertragung eine zustandslose Kommunikation zwischen dem ersten Teilnehmer und dem mindestens einen weiteren Teilnehmer erfolgt, sowie ein Kommunikationsnetzwerk und ein Fahrzeug.

Die DE 10 2015 207483 A1 betrifft ein Verfahren und eine Vorrichtung zum Verarbeiten eines dienstorientierten Middleware über Internetprotokoll (Service Oriented Middleware over Internet Protocol - SOME/IP) Datenstromes durch Zusammenwirken mit einer Audio-Video-Überbrückung (Audio Video Bridging - AVB) in einem Server. Nach einem Bestimmen eines Übertragungsschemas für den SOME/IP-Datenstrom wird eine Ausgangsereignisnachricht erzeugt und an einen Client übertragen gemäß dem bestimmten Übertragungsschema.

Es stellt sich das technische Problem, ein Verfahren zur Datenübertragung in einem Fahrzeug-Kommunikationsnetzwerk, ein Kommunikationsnetzwerk sowie einen Teilnehmer eines solchen Kommunikationsnetzwerks und ein Fahrzeug zu schaffen, die eine einfache und zuverlässige, insbesondere nachträgliche oder temporäre, Einbindung von weiteren Teilnehmern in das Fahrzeug-Kommunikationsnetzwerk und/oder das, insbesondere nachträgliche oder temporäre, Bereitstellen weiterer Dienste in dem Fahrzeug-Kommunikationsnetzwerk ermöglichen.

Die Lösung des technischen Problems ergibt sich durch die Gegenstände mit den Merkmalen der Ansprüche 1, 8, 9 und 10. Weitere vorteilhafte Ausgestaltungen der Erfindung ergeben sich aus den Unteransprüchen.

Vorgeschlagen wird ein Verfahren zur Datenübertragung zwischen mindestens zwei Teilnehmern in einem Fahrzeug-Kommunikationsnetzwerk eines Fahrzeugs.

Ein Teilnehmer kann insbesondere ein Steuergerät des Fahrzeugs sein. Alternativ kann ein Teilnehmer aber auch ein fahrzeugexternes Gerät, z.B. ein mobiles Endgerät wie ein Mobilfunktelefon, ein Tablet-PC oder ähnliches, oder eine fahrzeugexterne Recheneinrichtung, z.B. eine fahrzeugexterne Servereinrichtung, sein.

Mindestens ein Teilnehmer des Fahrzeug-Kommunikationsnetzwerks ist ein Fahrzeug-Teilnehmer. Hierbei bezeichnet ein Fahrzeug-Teilnehmer einen Teilnehmer, der in dem Fahrzeug angeordnet ist. Insbesondere kann der Fahrzeug-Teilnehmer fest im Fahrzeug verbaut sein. Weiter insbesondere kann er Fahrzeug-Teilnehmer ein Steuergerät des Fahrzeugs sein.

Das Fahrzeug-Kommunikationsnetzwerk kann selbstverständlich mehr als zwei Teilnehmer umfassen, wobei die weiteren Teilnehmer Fahrzeug-Teilnehmer oder fahrzeugexterne Teilnehmer sein können.

Teilnehmer des Fahrzeug-Kommunikationsnetzwerks können einen Server oder einen Client in dem Fahrzeug-Kommunikationsnetzwerk bilden. Allerdings sind die Teilnehmer nicht dauerhaft auf die Funktion eines Servers oder Clients festgelegt. So ist es möglich, dass ein Teilnehmer für einen oder mehrere Datenübertragungsvorgänge einen Server und für einen oder mehrere davon verschiedene Übertragungsvorgänge einen Client bereitstellt.

Hierbei kann ein Server einen Teilnehmer bezeichnen, der einen oder mehrere Dienste, die auch als Service bezeichnet werden können, bereitstellt oder anbietet. Beispielsweise kann ein Server einen Dienst anbieten, der Informationen über eine Geschwindigkeit des Fahrzeugs über das Fahrzeug-Kommunikationsnetzwerk bereitstellt. Auch kann als Dienst eine Information über eine Motortemperatur über das Fahrzeug-Kommunikationsnetzwerk bereitgestellt werden. Auch kann als Dienst eine Veränderung der Lautstärke eines Autoradios über das Fahrzeug-Kommunikationsnetzwerk bereitgestellt werden. Die erläuterten Dienste sind hierbei rein exemplarisch. Selbstverständlich kann noch einen Vielzahl von weiteren Diensten von Servern über das Fahrzeug-Kommunikationsnetzwerk bereitgestellt werden. Derartige Dienste sind dem Fachmann bekannt.

Ein Dienst kann insbesondere eine festgelegte Funktion sein, die ein Server anbietet und ein Client nutzen kann. Ein Dienst kann insbesondere ortsunabhängig genutzt werden. Vorzugsweise wird ein Dienst derart angeboten, dass ein den Dienst nutzender Client keine Informationen über die Implementierung des Dienstes für dessen Nutzung benötigt. Dies führt zur Reduktion oder vollständigen Aufhebung von Abhängigkeiten zwischen der Nutzung von Diensten und deren Implementierung. Schnittstellen eines Dienstes können insbesondere auf- und abwärtskompatibel ausgebildet sein. Bei der Nutzung eines Dienstes können insbesondere etablierte Standards zur Kommunikation mit dem Ziel einer guten Wartbarkeit und Wiederverwertbarkeit eingesetzt werden.

Ein Client kann einen Teilnehmer bezeichnen, der einen angebotenen Dienst nutzt.

Das Fahrzeug-Kommunikationsnetzwerk kann insbesondere ein Ethernet-basiertes Kommunikationsnetzwerk sein. In einem solchen Kommunikationsnetzwerk kann eine Datenübertragung erfolgen, indem Datenpakete über das Kommunikationsnetzwerk zwischen Teilnehmern übertragen werden. Die Teilnehmer können entsprechende Ethernet-Schnittstellen aufweisen. Die Datenübertragung kann hierbei entsprechend bekannter Übertragungsprotokolle erfolgen.

Ein Teilnehmer kann hierbei eine Steuer- und Auswerteeinrichtung zur Steuerung der Datenübertragung und zur Auswertung von Antworten bzw. darin enthaltenen Informationen umfassen. Eine solche Steuer- und Auswerteeinrichtung kann beispielsweise durch einen Mikrocontroller bereitgestellt werden.

Zu übertragende Daten, insbesondere Datenpakete, können eine Zieladressierung, die insbesondere durch eine Adressierung eines einzigen Ziels gegeben sein kann, enthalten. Weiter können zu übertragende Daten, insbesondere Datenpakete, eine Quelladressierung enthalten. Die Adressierung von Zielen und Quellen in dem Netzwerk kann dabei insbesondere jeweils mittels einer entsprechenden Ethernetadresse/Netzwerkadresse/Port-Kombination für den Zielknoten bzw. Quellknoten erfolgen. Im OSI/ISO Schichtenmodel kann in der Regel die Ethernetadresse (d. h. "Ethernet Media Access Control"(MAC)-Adresse) der Schicht 2, die Netzwerkadresse (z. B. IP-Adresse) der Schicht 3 und der Port (z. B. TCP-Port oder UDP-Port) der Schicht 4 zugeordnet werden. Unter einer "Ethernetadresse/Netzwerkadresse/Port-Kombination" im Sinne der Erfindung kann eine Zusammenfassung einer Ethernetadresse/Netzwerkadresse (z. B. IP-Adresse) mit einem zugeordneten Port zu verstanden werden. Eine Ziel-Ethernetadresse/Netzwerkadresse/Port-Kombination enthält somit die in den Daten spezifizierte Ziel-Ethernetadresse, Ziel-Netzwerkadresse sowie den zugeordneten Ziel-Port. Analog enthält eine Quell-Ethernetadresse/Netzwerkadresse/Port-Kombination die in den Daten spezifizierte Quell-Ethernetadresse, Quell-Netzwerkadresse sowie den zugeordneten Quell-Port. Auf Basis solcher Ethernetadresse/Netzwerkadresse/Port-Kombinationen kann eine Vermittlung der Daten im Fahrzeug-Kommunikationsnetzwerk erfolgen.

Unter einem "Port" im Sinne der Erfindung ist ein Zusatz zu einer Netzwerkadresse zu verstehen, der die Zuordnung von Verbindungen und Daten zu Server- und Client-Programmen beim Sender-Teilnehmer bzw. beim Empfänger-Teilnehmer bewirkt. So ist es damit etwa möglich, Daten zu verschiedenen von einem Server bereitgestellten Diensten einem Empfänger (Client) zur Verfügung zu stellen und dort den entsprechenden dienstbezogenen Anwendungen separat zuzuordnen, obwohl die Daten beider Dienste von einer selben Netzwerkadresse (z. B. IP-Adresse) des Senders zu einer einzigen Netzwerkadresse des Empfängers übermittelt wurden. Dienste können also über verschiedene Ports zur selben Ethernetadresse/Netzwerkadresse, z.B. MAC/IP-Adresse, bereitgestellt werden.

Unter einer "Ethernet-Schnittstelle" im Sinne der Erfindung ist eine Vorrichtung einer technischen Entität zu verstehen, mittels derer eine Ethernet-Kommunikationsverbindung mit wenigstens einer anderen technischen Entität bereitgestellt werden kann. Eine solche technische Entität kann etwa ein Netzwerkknoten in einem Ethernet-Kommunikationsnetzwerk sein. Insbesondere kann eine Ethernet-Schnittstelle physikalisch eine Anschlussvorrichtung zum Anschluss an eine Leitung für die Ethernet-Übertragung, insbesondere an eine genormte Ethernet-Leitung, aufweisen. Darüber hinaus kann die Kommunikationsschnittstelle Mittel zur Datenverarbeitung oder Aufbereitung aufweisen, mittels derer Daten oder andere Informationen senderseitig auf vorbestimmte Art und Weise übermittelt bzw. empfangsseitig gemäß den standardisierten Anforderungen von Ethernet-Kommunikation verarbeitet werden können.

Unter einem "Fahrzeug" im Sinne der Erfindung ist jede Art von Fahrzeug zu verstehen, mittels dessen eine oder mehrere Personen und/oder Ladung transportiert werden kann. Insbesondere ist ein Personenkraftwagen (PKW), ein Lastkraftwagen (LKW), ein Motorrad, ein Bus, ein Fahrrad oder ein Anhänger zu einem der vorausgehend genannten Fahrzeuge ein Fahrzeug im Sinne der Erfindung. Dies gilt insbesondere auch für die Zugeinheit sowie die Anhänger eines Zuges sowie für ein Wasserfahrzeug oder ein Luftfahrzeug, insbesondere ein Flugzeug.

Unter "konfiguriert" im Sinne der Erfindung ist zu verstehen, dass die entsprechende Vorrichtung bereits eingerichtet ist, eine bestimmte Funktion zu erfüllen. Unter "konfigurierbar" ist in Erweiterung dessen zu verstehen, dass die entsprechende Vorrichtung so einstellbar ist, dass sie bei entsprechender Einstellung eingerichtet ist, die bestimmte Funktion zu erfüllen. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen.

Erfindungsgemäß bildet der Fahrzeug-Teilnehmer einen Registrierungs-Server des Fahrzeug-Kommunikationsnetzwerk bildet oder stellt einen Registrierungs-Server bereit. Der Registrierungs-Server kann insbesondere einen Registrierungsdienst bereitstellen oder diesen anbieten.

Der mindestens eine weitere Teilnehmer überträgt in einem Anmeldevorgang Informationen über eine Dienst-Kategorie mindestens eines Dienstes, der von dem weiteren Teilnehmer bereitgestellt wird, und Informationen zu einer Dienst-Adresse an den Registrierungs-Server.

Der Anmeldevorgang kann hierbei einen Vorgang bezeichnen, durch den sich ein Teilnehmer, der z. B. noch nicht Teilnehmer im Fahrzeug-Kommunikationsnetzwerk ist und/oder mindestens ein Dienst, der von dem Teilnehmer angeboten wird, beim/am Fahrzeug-Kommunikationsnetzwerk anmeldet. Hierdurch wird der Teilnehmer ein Teilnehmer des Fahrzeug-Kommunikationsnetzwerks und/oder der angemeldete Dienst im Fahrzeug-Kommunikationsnetzwerk verfügbar. Insbesondere kann der Teilnehmer nach einem erfolgreichen Anmeldevorgang Dienste über das Fahrzeug-Kommunikationsnetzwerk bereitstellen oder angebotene Dienste nutzen.

In dem Anmeldevorgang kann eine Datenübertragung zwischen dem anmeldenden Teilnehmer und dem Registrierungs-Server erfolgen.

Eine Datenübertragung zwischen Teilnehmern kann hierbei einen oder mehrere Übertragungsvorgänge umfassen. In einem Datenübertragungsvorgang können beispielsweise Daten einer Anfrage und/oder Daten einer Antwort übertragen werden. Die Anfrage kann z.B. eine clientseitige Anfrage sein, wobei die Antwort eine serverseitige Antwort sein kann. Eine Antwort auf eine Anfrage kann als korrespondierende Antwort bezeichnet werden.

In dem Anmeldevorgang überträgt der anmeldende Teilnehmer Informationen über eine Dienst-Kategorie mindestens eines Dienstes, der von dem weiteren Teilnehmer bereitgestellt wird, an den Registrierungs-Server. Die Informationen können beispielsweise durch übertragene Daten kodiert sein. Wichtig ist, dass Informationen über die Dienst-Kategorie und somit nicht über die genaue Funktion/den Funktionsumfang des Diensts selbst übertragen werden.

Ein Dienst kann hierbei einer Dienst-Kategorie zugeordnet sein. Einer Dienst-Kategorie kann somit mindestens einen Dienst, insbesondere aber eine Mehrzahl von voneinander verschiedenen Diensten, zugeordnet sein.

Z.B. kann der Dienst, der Informationen über die Geschwindigkeit des Fahrzeugs über das Fahrzeug-Kommunikationsnetzwerk bereitstellt, einer Kategorie "Antrieb" zugeordnet sein. Z.B. kann der Dienst, der Informationen über die Motortemperatur des Fahrzeugs über das Fahrzeug-Kommunikationsnetzwerk bereitstellt, einer Kategorie "Motor" zugeordnet sein.

Z. B. kann der Dienst, der die Funktionalität einer Lautstärkeänderung für das Radio bereitstellt, einer Kategorie "Radio" zugeordnet sein.

Weiter überträgt der anmeldende Teilnehmer Informationen zu einer Dienst-Adresse an den Registrierungs-Server. Auch diese Informationen können beispielsweise durch übertragene Daten kodiert sein. Die Dienst-Adresse kann insbesondere in Form der vorhergehend erläuterten Ziel-Ethernetadresse/Netzwerkadresse/Port-Kombination übertragen werden bzw. kodiert sein. Selbstverständlich können auch andere Adressformate verwendet werden.

Hierzu kann es möglich sein, dass der anmeldende Teilnehmer vor dem Anmeldevorgang eine Adresse in dem Fahrzeug-Kommunikationsnetzwerk ermittelt oder ihm eine Adresse zugewiesen wird. Dies kann beispielsweise gemäß dem bekannten DHCP-Protokoll erfolgen. Hierzu kann einer der Teilnehmer des Fahrzeug-Kommunikationsnetzwerks einen DHCP-Server bereitstellen, wobei dieser Server, insbesondere in Form eines Dienstes, die Adresse bereitstellt.

Es ist möglich, dass der Registrierungs-Server eine vorbekannte Referenzadresse aufweist. Alternativ kann der anmeldende Teilnehmer eine Adresse des Registrierungs-Servers im Fahrzeug-Kommunikationsnetzwerk ermitteln, insbesondere durch Inanspruchnahme entsprechender Dienste.

Weiter speichert der Registrierungs-Server die teilnehmerspezifische Dienst-Kategorie bzw. die Informationen darüber und die teilnehmerspezifische Dienst-Adresse abrufbar ab. Hierbei sind die Dienst-Kategorie und die Dienst-Adresse einander zugeordnet.

Insbesondere ist es nach der Speicherung für Teilnehmer des Fahrzeug-Kommunikationsnetzwerks möglich, von dem Registrierungs-Server die Informationen über eine oder ausgewählte aber nicht alle oder vorzugsweise über alle teilnehmerspezifischen Dienst-Adressen abzurufen oder abzufragen, die einen Dienst adressieren, der einer ausgewählten Dienst-Kategorie zugeordnet ist.

Insbesondere kann der Registrierungs-Server einen Adress-Speicherdienst bereitstellen, der die Dienst-Kategorie und die entsprechende Dienst-Adresse abrufbar speichert. Hierzu kann der Registrierungs-Server auf mindestens eine Speichereinrichtung datentechnisch zugreifen.

Weiter kann der Registrierungs-Server einen Adress-Abrufdienst bereitstellen, wobei der Adress-Abrufdienst bei einer entsprechenden Dienst-Kategorie-Anfrage die Informationen über eine oder über ausgewählte aber nicht alle oder vorzugsweise über alle teilnehmerspezifischen Dienst-Adressen über das Fahrzeug-Kommunikationsnetzwerk bereitstellt, die einen Dienst adressieren, der einer ausgewählten Dienst-Kategorie zugeordnet ist. Hierbei kann die ausgewählte Dienst-Kategorie in der entsprechenden Dienst-Kategorie -Anfrage enthalten sein.

Nach der Anmeldung ist es somit für jeden Teilnehmer möglich, die Dienst-Adressen von Diensten einer gewünschten Kategorie abzufragen. Nachfolgend kann dann die Funktionalität/der Funktionsumfang der Dienste und in Abhängigkeit der Funktionalität/des Funktionsumfangs die Dienst-Adresse eines gewünschten Dienstes ermittelt und dieser Dienst kann genutzt werden.

Hierdurch ergibt sich in vorteilhafter Weise eine rechentechnisch einfach zu implementierende und zeitlich schnell durchführbare Ermittlung und Nutzung von Diensten, insbesondere von Diensten, die nachträglich, insbesondere durch neue Teilnehmer, im Fahrzeug-Kommunikationsnetzwerk bereitgestellt werden. Dadurch, dass nur eine Dienst-Kategorie und nicht die Information über die genaue Funktionalität des Dienstes selbst abrufbar gespeichert wird, können sich in vorteilhafter Weise auch Dienste, die von einem Teilnehmer, der bereits Teilnehmer im Fahrzeug-Kommunikationsnetzwerk ist, bereitgestellt werden, ändern, beispielsweise wenn ein Software-Update durchgeführt wird. Die Änderung kann hierbei zur Laufzeit erfolgen, insbesondere ist keine aufwändige Neukonfiguration des Fahrzeug-Kommunikationsnetzwerks notwendig.

Insgesamt ergibt sich in vorteilhafter Weise ein Verfahren, welches eine einfache und zuverlässige Einbindung von weiteren Teilnehmern in das Fahrzeug-Kommunikationsnetzwerk und/oder das Bereitstellen weiterer Dienste in dem Fahrzeug-Kommunikationsnetzwerk ermöglicht.

In einer weiteren Ausführungsform überträgt ein Teilnehmer eine Dienst-Kategorie-Anfrage über das Fahrzeug-Kommunikationsnetzwerk an den Registrierungs-Server. Wie vorhergehend erläutert, kann in einer solchen Anfrage eine gewünschte Dienst-Kategorie enthalten oder kodiert sein. Weiter überträgt der Registrierungs-Server in einer Antwort alle der Dienst-Kategorie zugeordneten Dienst- Adressen über das Fahrzeug-Kommunikationsnetzwerk an den anfragenden Teilnehmer. Somit erhält der anfragende Teilnehmer die Adressinformationen für alle bereitgestellten Dienste einer gewünschten Dienst-Kategorie. Hierdurch wird in vorteilhafter Weise eine Datenmenge im Vergleich zu einer Datenmenge, die zum Übertragen von Informationen über die Funktionalität der einzelnen Dienste notwendig ist, reduziert, wobei der Teilnehmer jedoch Informationen über alle unter einer Dienst-Kategorie verfügbaren Dienste, nämlich Informationen über deren Dienst-Adressen, erhält.

In einer weiteren Ausführungsform überträgt der Teilnehmer eine Dienst-Anfrage an mindestens einen Server-Teilnehmer, dem eine der Dienst-Adressen zugeordnet ist, über das Fahrzeug-Kommunikationsnetzwerk. Weiter überträgt der mindestens eine Server-Teilnehmer in einer Antwort Informationen über den mindestens einen unter dieser Dienst-Adresse bereitgestellten Dienst an den Teilnehmer, insbesondere Informationen über eine Funktionalität des Dienstes.

Selbstverständlich kann der Teilnehmer mehrere Dienst-Anfragen an jeweils voneinander verschiedene Dienst-Adressen übertragen, insbesondere an ausgewählte, aber nicht alle oder an alle Dienst-Adressen, die in der Antwort auf die Dienst-Kategorie-Anfrage bereitgestellt wurden. In Abhängigkeit der bereitgestellten Informationen über die unter den Dienst-Adressen bereitgestellten Dienste kann dann der anfragende Teilnehmer bestimmen, ob und, wenn ja, welchen Dienst er nutzen möchte.

Hierdurch ergibt sich in vorteilhafter Weise, dass zur Laufzeit zuverlässig, schnell und in einfach zu implementierender Weise alle bereitgestellten Dienste durch einen Teilnehmer ermittelt und gegebenenfalls genutzt werden können.

In einer weiteren Ausführungsform bestimmt der Teilnehmer einen gewünschten Dienst in Abhängigkeit der Informationen über die bereitgestellten Dienste. Dies wurde vorhergehend bereits erläutert. Weiter überträgt der Teilnehmer über das Fahrzeug-Kommunikationsnetzwerk eine Dienst-Ausführ-Anfrage an den Server-Teilnehmer, der den gewünschten Dienst bereitstellt. Die Dienst-Ausführ-Anfrage kann hierbei die Ausführung des Dienstes und somit dessen Nutzung initiieren. Somit kann der entsprechende Dienst ausgeführt werden. Allerdings können während der Ausführung des Dienstes weitere Anfragen/Antworten über das Fahrzeug-Kommunikationsnetzwerk übertragen werden.

Hierdurch ergibt sich in vorteilhafter Weise, dass ein gewünschter Dienst zur Laufzeit zeitlich schnell und zuverlässig ermittelt und genutzt werden kann.

In einer weiteren Ausführungsform ist ein Dienst einer Dienst-Kategorie Beleuchtung, Media, Türen und Klappen, Fahrwerk, Antrieb, Motor oder einer weiteren Dienst-Kategorie zugeordnet. Dienste der Dienst-Kategorie Beleuchtung können beispielsweise Funktionen für und/oder Informationen über eine Fahrzeugbeleuchtung, insbesondere eine Innen- oder Außenbeleuchtung, bereitstellen. Dienste der Dienst-Kategorie Media können beispielsweise Funktionen für und/oder Informationen über Media-Geräte im Fahrzeug, z.B. Geräte eines Infotainment-Systems, bereitstellen. Dienste der Dienst-Kategorie Türen und Klappen können beispielsweise Funktionen für und/oder Informationen über schließbare und zu öffnende Fahrzeugtüren und -klappen bereitstellen. Dienste der Dienst-Kategorie Fahrwerk können beispielsweise Funktionen für eine Veränderung von Eigenschaften des Fahrwerks und/oder Informationen über das Fahrwerk bereitstellen. Dienste der Dienst-Kategorie Antrieb können beispielsweise Funktionen für die Steuerung des Antriebs und/oder Informationen über Antriebsgrößen bereitstellen. Dienste der Dienst-Kategorie Motor können beispielsweise Funktionen für die Steuerung des Motors und/oder Informationen über Motorparameter bereitstellen.

Die Dienst-Kategorien sollten vorzugsweise derart gewählt werden, dass möglichst alle aktuell verfügbaren und zukünftigen Dienste einer Kategorie zugeordnet werden können.

Hierdurch ergibt sich in vorteilhafter Weise eine Kategorisierung von Diensten, die ein rechentechnisch effektives Ermitteln und gegebenenfalls Nutzen von Diensten, insbesondere auch sich ändernden oder nur temporär verfügbaren Diensten, zur Laufzeit ermöglicht.

In einer weiteren Ausführungsform wird die teilnehmerspezifische Dienst-Kategorie und die teilnehmerspezifische Dienst -Adresse gelöscht, falls ein Teilnehmer eine Abmelde-Anfrage an den Registrierungsserver überträgt. Eine Abmelde-Anfrage kann beispielsweise erzeugt werden, wenn ein Nutzer den Teilnehmer vom Fahrzeug-Kommunikationsnetzwerk abmeldet, z.B. durch eine Nutzereingabe.

Alternativ werden die teilnehmerspezifische Dienst-Kategorie und die teilnehmerspezifische Dienst- Adresse gelöscht, falls keine Daten zwischen dem Registrierungs-Server und dem Teilnehmer übertragbar sind. Es ist z.B. möglich, dass an alle abrufbar gespeicherten Dienst-Adressen kontinuierlich oder periodisch Daten, z.B. Testdaten zum Testen der Verfügbarkeit der Datenübertragung, übertragen werden. Dies kann beispielsweise durch den Registrierungsserver erfolgen oder durch einen Dienst, der vom Registrierungs-Server oder einem weiteren Teilnehmer bereitgestellt wird. Wird detektiert, dass keine Datenübertragung von und zu einem Dienst unter der Dienst-Adresse möglich ist, so kann diese Dienst-Adresse und die ihr zugeordnete Dienst-Kategorie gelöscht werden. Es ist weiter möglich, dass ähnliche Dienst-Adressen, z.B. Adressen mit gleicher Ethernet-Adresse/Netzwerk-Adresse-Kombination in diesem Fall ebenfalls gelöscht werden.

Alternativ werden die teilnehmerspezifische Dienst-Kategorie und die teilnehmerspezifische Dienst-Kategorie-Adresse gelöscht, falls ein Fahrzeug-Klemmenzyklus beendet wird. Insbesondere können bei Beendigung eines Fahrzeug-Klemmenzyklus alle oder ausgewählte, aber nicht alle, gespeicherten Dienst-Kategorien und Dienst-Adressen gelöscht werden.

Das Löschen kann hierbei durch den Registrierungsserver erfolgen.

Nach einem erneuten Beginn eines Fahrzeug-Klemmenzyklus kann es dann erforderlich sein, dass alle oder noch nicht angemeldete Teilnehmer des Fahrzeug-Kommunikationsnetzwerks sich erneut anmelden.

Es ist selbstverständlich möglich, dass mindestens eine Dienst-Kategorie und eine ihr zugeordnete Dienst-Adresse nicht gelöscht werden, insbesondere nicht bei Beendigung eines Fahrzeug-Klemmenzyklus. Diese können permanent abrufbar gespeichert sein. Diese können beispielsweise Dienste adressieren, die von Teilnehmern bereitgestellt werden, die nach jedem erneuten Beginn Teilnehmer des Fahrzeug-Kommunikationsnetzwerk sind/werden, insbesondere Teilnehmer, die durch fest im Fahrzeug verbaute Steuergeräte bereitgestellt werden.

In einer weiteren Ausführungsform erfolgt mittels der Datenübertragung zwischen Teilnehmern des Fahrzeug-Kommunikationsnetzwerks eine zustandslose Kommunikation.

Eine derartige zustandslose Kommunikation ist in der eingangs erläuterten
DE 10 2014 201 948 A1 beschrieben, auf deren Offenbarungsgehalt hiermit vollumfänglich Bezug genommen wird.

Zustandslos kann insbesondere bedeuten, dass Daten einer vollständigen clientseitigen Anfrage und/oder Daten einer vollständigen serverseitigen Antwort jeweils in genau einem Übertragungsvorgang übertragen werden. Die serverseitige Antwort kann hierbei eine Antwort auf die clientseitige Anfrage sein, wobei eine solche Antwort als korrespondierende Antwort bezeichnet werden kann. Unter anderem kann zustandslos auch bedeuten, dass alle Informationen, die zur Ausführung mindestens einer serverseitigen Operation notwendig sind, in genau einem Übertragungsvorgang vom Client zum Server übertragen werden. Weiter kann zustandslos bedeuten, dass alle Informationen, die zur Ausführung mindestens einer clientseitigen Operation notwendig sind, in genau einem Übertragungsvorgang vom Server zum Client übertragen werden. Weiter kann zustandslos auch bedeuten, dass alle Informationen, die zur Bestätigung einer durch einen Server angefragten Operation notwendig sind, in genau einem Übertragungsvorgang vom Client zu dem Server übertragen werden. Weiter kann zustandslos auch bedeuten, dass alle Informationen, die zur Bestätigung einer durch einen Client angefragten Operation notwendig sind, in genau einem Übertragungsvorgang vom Server zu dem Client übertragen werden. Insbesondere ist es hierdurch nicht mehr erforderlich, eine clientseitige Anfrage als auch eine serverseitige Antwort in einer mehrere Übertragungsvorgänge umfassenden Sequenz wie bisher üblich zu übertragen. Ein einzelner Übertragungsvorgang bezeichnet hierbei einen Teil einer Gesamtsequenz, die zu einer Synchronisation der Zustände in Client und Server notwendig ist.

Anfragen, insbesondere clientseitige Anfragen, können hierbei z.B. eine Lese-Anfrage, eine Schreib-Anfrage oder eine Löschen-Anfrage sein, die jeweils serverseitig oder clientseitig eine Lese-Operation, eine Schreib-Operation oder eine Löschen-Operation auslösen. Eine Schreib-Anfrage kann hierbei eine Erzeugen-Anfragen oder eine Aktualisierungs-Anfrage sein. Insbesondere können auch mindestens eine Anfrage und/oder Antwort in dem vorhergehend erläuterten Anmeldevorgang, eine Adress-Speicher-Anfrage eine Dienst-Kategorie-Anfrage, eine Dienst-Ausführ-Anfrage, eine Dienst-Anfrage sowie entsprechende Antworten Anfragen und Antworten einer zustandslosen Datenübertragung sein.

Mit anderen Worten kann zustandslos auch bedeuten, dass ein Teilnehmer keine Informationen über den Zustand eines weiteren Teilnehmers braucht, um mit diesem eine Datenübertragung für einen gewünschten Zweck, z. B. zur Nutzung eines Dienstes, durchzuführen. Auch kann zustandslos bedeuten, dass die Teilnehmer Operationen aufgrund der in dem einen Übertragungsvorgang übertragenen Informationen ausführen können und keine weitere Kenntnisse benötigen, insbesondere keine weiteren Kenntnisse über bisher erfolgte Kommunikationsvorgänge und/oder die darin übermittelten Informationen.

Als Alternative zu der abrufbaren Speicherung von Dienst-Kategorien und diesen zugeordnete Dienst-Adressen durch den/in dem Registrierungs-Server kann die Ermittlung von Diensten, die von Servern über das Fahrzeug-Kommunikationsnetzwerk bereitgestellt werden können, auch durch ein so genanntes Multicast-Verfahren erfolgen. Hierbei kann ein Teilnehmer Informationen über die von ihm bereitgestellten Dienste, insbesondere Informationen über deren Funktionalität und/oder zu der entsprechenden Dienst-Kategorie, sowie die zugeordnete Dienst-Adresse an alle Teilnehmer des Fahrzeug-Kommunikationsnetzwerks übertragen, z. B. periodisch. In diesem Fall können Teilnehmer die entsprechenden Informationen speichern und nachfolgend zur Ermittlung und Ausführung von Diensten nutzen. Dies kann beispielsweise über den SOME/IP-Standard erfolgen.

Weiter vorgeschlagen wird ein Fahrzeug-Kommunikationsnetzwerk. Das Fahrzeug-Kommunikationsnetzwerk umfasst mindestens zwei Teilnehmer, wobei mindestens ein Teilnehmer des Fahrzeug-Kommunikationsnetzwerks ein Fahrzeug-Teilnehmer ist, der in dem Fahrzeug angeordnet ist. Die Teilnehmer können hierbei datentechnisch über das Fahrzeug-Kommunikationsnetzwerk verbunden sein. Eine datentechnische Verbindung kann hierbei eine drahtgebundene oder aber eine drahtlose Verbindung sein.

Erfindungsgemäß bildet der Fahrzeug-Teilnehmer einen Registrierungs-Server des Fahrzeug-Kommunikationsnetzwerks oder stellt einen solchen bereit. Weiter sind von dem mindestens einen weiteren Teilnehmer in einem Anmeldevorgang Informationen über eine Dienst-Kategorie mindestens eines Diensts, der von dem weiteren Teilnehmer bereitgestellt wird, und Informationen zu einer Dienst-Adresse an den Registrierungs-Server übertragbar, insbesondere über das Fahrzeug-Kommunikationsnetzwerk. Weiter sind durch den Registrierungs-Server die teilnehmerspezifische Dienst-Kategorie und die teilnehmerspezifische Dienst-Adresse abrufbar speicherbar.

Mittels dem Fahrzeug-Kommunikationsnetzwerk ist in vorteilhafter Weise ein Verfahren gemäß einer der in dieser Offenbarung beschriebenen Ausführungsformen durchführbar. Somit kann das Fahrzeug-Kommunikationsnetzwerk derart ausgebildet/konfiguriert sein, dass ein solches Verfahren mittels des Fahrzeug-Kommunikationsnetzwerks durchführbar ist.

Das Fahrzeug-Kommunikationsnetzwerk kann neben mindestens einem Fahrzeug-Teilnehmer auch weitere Fahrzeug-Teilnehmer und/oder fahrzeugexterne Teilnehmer, insbesondere mobile Endgeräte oder fahrzeugexterne Server-Einrichtungen, umfassen. Weiter kann das Fahrzeug-Kommunikationsnetzwerk Datenvermittlungseinrichtungen oder-teilnehmer umfassen.

Weiter vorgeschlagen wird ein Teilnehmer eines Fahrzeug-Kommunikationsnetzwerks gemäß einer der in dieser Offenbarung erläuterten Ausführungsform, wobei der Teilnehmer einen Registrierungs-Server des Fahrzeug-Kommunikationsnetzwerks bildet oder bereitstellt.

Insbesondere kann der Teilnehmer also einen Adress-Speicher-Dienst und einen Adress-Abruf-Dienst in dem Fahrzeug-Kommunikationsnetzwerk bereitstellen.

Weiter vorgeschlagen wird ein Fahrzeug, wobei das Fahrzeug mindestens einen Fahrzeug-Teilnehmer eines Fahrzeug-Kommunikationsnetzwerks umfasst, wobei der Fahrzeug-Teilnehmer einen Registrierungs-Server des Fahrzeug-Kommunikationsnetzwerks bildet oder bereitstellt.

Die Erfindung wird anhand eines Ausführungsbeispiels näher erläutert. Die Figuren zeigen:
- Fig. 1: ein schematisches Blockschaltbild eines erfindungsgemäßen Fahrzeug-Kommunikationsnetzwerks,
- Fig. 2: eine schematische Darstellung eines erfindungsgemäßen Fahrzeugs.

Nachfolgend bezeichnen gleiche Bezugszeichen Elemente mit gleichen oder ähnlichen technischen Merkmalen.

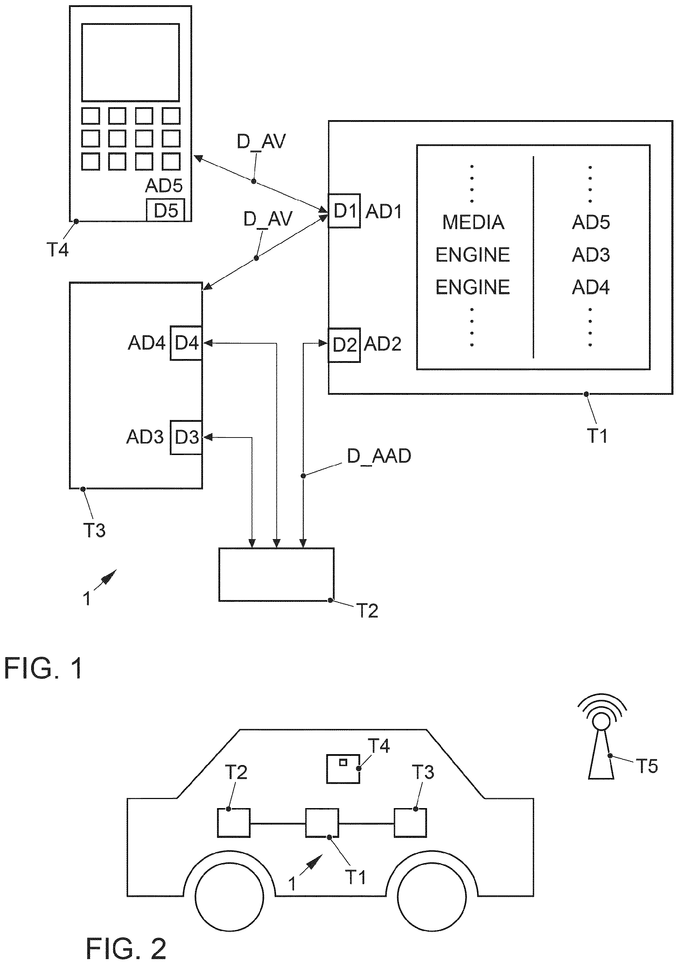

Fig. 1 zeigt ein schematisches Blockschaltbild eines Fahrzeug-Kommunikationsnetzwerks 1, wobei das Fahrzeug-Kommunikationsnetzwerk 1 vier Teilnehmer T1, T2, T3, T4 umfasst. Hierbei ist ein erster Teilnehmer T1 ein Fahrzeug-Teilnehmer und als Registrierungsserver ausgebildet. Ein zweiter Teilnehmer T2 ist ebenfalls ein Fahrzeug-Teilnehmer. Ein dritter Teilnehmer T3 ist ebenfalls ein Fahrzeug-Teilnehmer und beispielsweise als Motorsteuergerät ausgebildet. Ein vierter Teilnehmer T4 ist ein fahrzeugexterner Teilnehmer und beispielsweise als Mobilfunkgerät ausgebildet.

Der erste Teilnehmer T1, der dritte Teilnehmer T3 und der vierte Teilnehmer T4 stellen Dienste D1, D2, D3, D4, D5 über das Fahrzeug-Kommunikationsnetzwerk 1 bereit. Somit können die Teilnehmer T1, T3, T4 als Server ausgebildet sein. Selbstverständlich können die Teilnehmer T1, T3, T4 auch Clients bilden, insbesondere wenn sie nicht dargestellte Dienste weiterer Server nutzen.

Ein erster Dienst D1 des ersten Teilnehmers T1 ist beispielsweise ein Adress-Speicher-Dienst. Über diesen Dienst D1 kann eine Dienst-Kategorie eines Dienstes D3, D4, D5 und eine diesem Dienst zugeordnete Adresse AD3, AD4, AD5 im Fahrzeug-Kommunikationsnetzwerk 1 gespeichert werden, insbesondere in einer Speichereinrichtung, auf die der erste Teilnehmer 1 Zugriff hat. Informationen über die Dienst-Kategorie und die Dienst-Adresse AD3, AD4, AD5 können über das Fahrzeug-Kommunikationsnetzwerk 1 von weiteren Teilnehmer T3, T4 an den ersten Teilnehmer T1 übertragen werden.

Ein weiterer Dienst D2 des ersten Teilnehmers T1 ist beispielsweise ein Adress-Abruf-Dienst. Über diesen Adress-Abruf-Dienst können Informationen über Dienst-Adressen AD3, AD4, AD5 von Diensten D3, D4, D5, die einer gewünschten Dienst-Kategorie zugeordnet sind, einem Teilnehmer T2 über das Fahrzeug-Kommunikationsnetzwerk 1 zur Verfügung gestellt werden. Ein erster Dienst D3 des dritten Teilnehmers T3 kann beispielsweise ein Dienst sein, der Informationen über eine Motortemperatur über das Fahrzeug-Kommunikationsnetzwerk 1 zur Verfügung stellt. Ein weiterer Dienst D4 des dritten Teilnehmers T3 kann beispielsweise ein Dienst sein, der Informationen über eine Motordrehzahl über das Fahrzeug-Kommunikationsnetzwerk 1 zur Verfügung stellt.

Ein Dienst D5 des vierten Teilnehmers T4 kann beispielsweise ein Dienst sein, der Musikdaten, die beispielsweise auf dem vierten Teilnehmer T4 gespeichert sind, über das Fahrzeug-Kommunikationsnetzwerk 1 zur Verfügung stellt.

In einem Anmeldevorgang, der exemplarisch für den vierten Teilnehmer T4 erläutert wird, überträgt der vierte Teilnehmer T4 Informationen über die Dienst-Kategorie der von ihm bereitgestellten Dienste, im vorliegenden Fall also Informationen über die Dienst-Kategorie "MEDIA" des Diensts D5, und die diesem Dienst zugeordnete Dienst-Adresse AD5 an den ersten Teilnehmer T1, insbesondere durch einen Inanspruchnahme des Adress-Speicher-Diensts.

Der erste Teilnehmer T1 speichert diese Dienst-Kategorie "MEDIA" und die Dienst-Adresse AD5 abrufbar und einander zugeordnet ab. Im vorliegenden Fall ist der erläuterte Dienst D5 einer Dienstkategorie "MEDIA" zugeordnet und ihm ist eine erste Adresse AD5 zugewiesen. Entsprechend hat der erste Teilnehmer T1 bereits eine Dienst-Kategorie "ENGINE" der Dienste D3, D4 sowie die diesen zugeordnete Dienst-Adressen AD3, AD4 gespeichert.

Die Datenübertragungsvorgänge der hierzu erforderlichen Anmelde-Vorgänge ist schematisch durch Pfeile D_AV dargestellt.

Die Dienst-Adresse AD1, AD2, AD3, AD4, AD5 oder zumindest ein Teil davon kann einem Teilnehmer T1, T2, T3, T4 von einem DHCP-Server (nicht dargestellt) des Fahrzeug-Kommunikationsnetzwerks 1 zugewiesen werden. Dienst-Adressen AD1, AD2, AD3, AD4, AD5 verschiedener Dienste D1, D2, D3, D4, die von einem Teilnehmer T1, T3 bereitgestellt werden, können z.B. denselben MAC/IP-Teil aber verschiedene Ports in einer MAC/IP/Port-Adresse aufweisen.

Der zweite Teilnehmer T2 möchte eine aktuelle Motortemperatur über das Fahrzeug-Kommunikationsnetzwerk 1 abfragen. Hierbei ist vorbekannt, dass ein entsprechender Dienst der Dienstkategorie "ENGINE" zugeordnet ist.

Hierfür nutzt der zweite Teilnehmer T2 den Adress-Abruf-Dienst D2, der von dem ersten Teilnehmer T1 bereitgestellt wird. Eine entsprechende Datenübertragung ist schematisch mit D_AAD gekennzeichnet. Insbesondere überträgt der zweite Teilnehmer T2 eine Adress-Abruf-Anfrage an den ersten Teilnehmer T1, wobei diese Adress-Abruf-Anfrage die gewünschte Dienstkategorie "ENGINE" enthält oder kodiert. Als Antwort auf die Adress-Abruf-Anfrage überträgt der erste Teilnehmer T1 die gespeicherten Dienstadressen AD3, AD4 aller Dienste D3, D4, die der gewünschten Dienstkategorie "ENGINE" zugeordnet sind.

Nach Empfang der Dienst-Adressen AD3, AD4 fragt der zweite Teilnehmer T2 weitere Informationen über diese Dienste D3, D4 ab, indem er mit einer Dienst-Anfrage unter der entsprechenden Dienst-Adresse AD3, AD4 den dritten Teilnehmer T3 anfragt. Als Antwort auf diese Dienst-Anfrage werden Informationen über diese Dienste D3, D4, insbesondere über deren Funktionalität, an den zweiten Teilnehmer T2 übertragen. Dieser kann dann den gewünschten Dienst D3 ermitteln und eine Dienst-Aufruf-Anfrage an diesen ersten Dienst D3 des dritten Teilnehmers T3 übertragen. Der dritte Teilnehmer T3 kann dann den Dienst D3 ausführen und Informationen über eine Motortemperatur an den zweiten Teilnehmer T2 übertragen.

Die Informationen über die Dienst-Kategorien von Diensten D3, D4, D5 und die diesen Diensten D3, D4, D5 zugeordneten Dienst-Adressen AD3, AD4, AD5, also auch Informationen über die Zuordnung, können in Form einer Tabelle, insbesondere einer Look-Up-Tabelle, gespeichert sein, die schematisch in Fig. 1 dargestellt ist.

Die Informationen über die Dienst-Kategorien von Diensten D3, D4, D5 und die diesen Diensten D3, D4, D5 zugeordneten Dienst-Adressen AD3, AD4, AD5 können aus der Zuordnung gelöscht und somit nicht mehr abrufbar sein, wenn ein Teilnehmer T2, T3, T4 nicht mehr Teilnehmer des Fahrzeug-Kommunikationsnetzwerks 1 ist. Dies kann beispielsweise detektiert werden, wenn der Teilnehmer T2, T3, T4 oder der entsprechende Dienst einen Abmeldevorgang durchführt. Weiter kann dies detektiert werden, wenn keine Datenübertragung zu dem Teilnehmer T2, T3, T4 mehr möglich ist.
Die Datenübertragung zwischen den Teilnehmern T1, T2, T3, T4, insbesondere die Datenübertragung bei der Ausführung der erläuterten Dienste D1, D2, D3, D4, D5, können Datenübertragungen einer zustandslosen Kommunikation sein.

Fig. 2 zeigt eine schematische Darstellung eines Fahrzeugs 2. Das Fahrzeug 2 umfasst Teilnehmer T1, T2, T3, T4, T5 eines Fahrzeug-Kommunikationsnetzwerks 1. Insbesondere umfasst das Fahrzeug 2 einen Fahrzeug-Teilnehmer 1, der als Registrierungs-Server ausgebildet ist. Weiter kann das Fahrzeug-Kommunikationsnetzwerk 1 ein fahrzeugexternes, insbesondere also einen nicht im Fahrzeug 2 verbauten, Teilnehmer T4, T5 umfassen. Z.B. kann der vierte Teilnehmer T4 ein Mobilfunkgerät und der fünfte Teilnehmer T5 ein externer Server sein.

Es ist z.B. möglich, dass das dargestellte Fahrzeug 2 ein Nutzfahrzeug ist, an welches eine nicht dargestellte Be- und Entladevorrichtung angekoppelt oder angeschlossen werden kann. Eine solche Be- und Entladevorrichtung, z.B. ein Ladekran, kann mechanisch und/oder signal- und/oder datentechnisch mit dem Fahrzeug-Kommunikationsnetzwerk 1 verbunden werden, wobei ein Steuergerät der Be- und Entladevorrichtung ein Teilnehmer des Fahrzeug-Kommunikationsnetzwerks 1 werden kann. Das Steuergerät kann dann Dienste zur Steuerung der Be- und Entladevorrichtung oder Dienste zur Abfrage von Statusinformationen der Be- und Entladevorrichtung über das Fahrzeug-Kommunikationsnetzwerk 1 bereitstellen. Diese können genutzt werden, um die Be- und Entladevorrichtung für einen entsprechenden Be- oder Entladevorgang zu nutzen. Nach Beendigung des Be- oder Entladevorgangs kann sich dann das Steuergerät der Be- und Entladevorrichtung vom Fahrzeug-Kommunikationsnetzwerk 1 abmelden und die Verbindungen zwischen der Be- und Entladevorrichtung können getrennt werden. Dieses Beispiel verdeutlicht, wie nur temporär benötigte Dienste über das Fahrzeug-Kommunikationsnetzwerk 1 bereitgestellt werden können.

### Bezugszeichenliste

- 1: Fahrzeug-Kommunikationsnetzwerk
- 2: Fahrzeug
- T1: erster Teilnehmer
- T2: zweiter Teilnehmer
- T3: dritter Teilnehmer
- T4: vierter Teilnehmer
- T5: fünfter Teilnehmer
- D1: erster Dienst des ersten Teilnehmers
- D2: weiterer Dienst des ersten Teilnehmers
- D3: erster Dienst des dritten Teilnehmers
- D4: weiterer Dienst des dritten Teilnehmers
- D5: Dienst des vierten Teilnehmers
- AD1: Dienst-Adresse
- AD2: Dienst-Adresse
- AD3: Dienst-Adresse
- AD4: Dienst-Adresse
- AD5: Dienst-Adresse
- D_AV: Datenübertragung im Anmeldevorgang
- D_AAD: Datenübertragung in der Adress-Speicher-Anfrage

## Patentansprüche

1. Verfahren zur Datenübertragung zwischen mindestens zwei Teilnehmern (T1, T2, T3, T4, T5) in einem Fahrzeug-Kommunikationsnetzwerk (1) eines Fahrzeugs (2), wobei mindestens ein Teilnehmer (T1) des Fahrzeug-Kommunikationsnetzwerks ein Fahrzeug-Teilnehmer ist, der in dem Fahrzeug (2) angeordnet ist,
**dadurch gekennzeichnet, dass**
der Fahrzeug-Teilnehmer (T1) einen Registrierungs-Server des Fahrzeug-Kommunikationsnetzwerk (1) bildet oder bereitstellt, wobei der mindestens eine weitere Teilnehmer (T2, T3, T4, T5) in einem Anmeldevorgang Informationen über eine Dienst-Kategorie mindestens eines Diensts (D3, D4, D5), der von dem weiteren Teilnehmer (T2, T3, T4, T5) bereitgestellt wird, und Informationen zur einer Dienst-Adresse (AD3, AD4, AD5) an den Registrierungs-Server überträgt, wobei der Registrierungs-Server die teilnehmerspezifische Dienst-Kategorie und die teilnehmerspezifische Dienst-Adresse (AD3, AD4, AD5) abrufbar speichert.

2. Verfahren nach Anspruch 1, **dadurch gekennzeichnet, dass** ein Teilnehmer (T2) eine Dienst-Kategorie-Anfrage an den Registrierungs-Server überträgt, wobei der Registrierungs-Server in einer Antwort alle der Dienst-Kategorie zugeordneten Dienst-Adressen (DA3, DA4, DA5) überträgt.

3. Verfahren nach Anspruch 2, **dadurch gekennzeichnet, dass** der Teilnehmer (T2) eine Dienst-Anfrage an mindestens einen Server-Teilnehmer (T3, T4) überträgt, dem eine der Dienst-Adressen (DA3, DA4) zugeordnet ist, wobei der mindestens eine Server-Teilnehmer (T3) in einer Antwort Informationen über mindestens einen unter dieser Dienst-Adresse (DA3, DA4) bereitgestellten Dienst (D3, D4) an den Teilnehmer (T2) überträgt.

4. Verfahren nach Anspruch 3, **dadurch gekennzeichnet, dass** der Teilnehmer (T2) einen gewünschten Dienst (D3) in Abhängigkeit der Informationen über einen bereitgestellten Dienst (D3, D4) bestimmt, wobei der Teilnehmer (T2) eine Dienst-Ausführ-Anfrage an den Server-Teilnehmer (T3) überträgt, der den gewünschten Dienst (D3) bereitstellt.

5. Verfahren nach einem der vorangegangenen Ansprüche, **dadurch gekennzeichnet, dass** ein Dienst (D3, D4, D5) einer Dienst-Kategorie Beleuchtung, Media (MEDIA), Türen und Klappen, Fahrwerk, Antrieb, Motor (ENGINE) oder einer weiteren Dienst-Kategorie zugeordnet ist.

6. Verfahren nach einem der vorangegangenen Ansprüche, **dadurch gekennzeichnet, dass** die teilnehmerspezifische Dienst-Kategorie und die teilnehmerspezifische Dienst-Adresse (DA3, DA4, DA5) gelöscht wird, falls ein Teilnehmer (T3, T4, T5) eine Abmelde-Anfrage an den Registrierungs-Server überträgt oder falls keine Daten zwischen dem Registrierungs-Server und dem Teilnehmer (T3, T4, T5) übertragbar sind oder falls ein Fahrzeug-Klemmenzyklus beendet wird.

7. Verfahren nach einem der vorangegangenen Ansprüche, **dadurch gekennzeichnet, dass** mittels der Datenübertragung zwischen Teilnehmern (T1, T2, T3, T4, T5) des Fahrzeug-Kommunikationsnetzwerks (1) eine zustandslose Kommunikation erfolgt.

8. Fahrzeug-Kommunikationsnetzwerk (1), wobei das Fahrzeug-Kommunikationsnetzwerk (1) mindestens zwei Teilnehmer (T1, T2, T3, T4, T5) umfasst, wobei mindestens ein Teilnehmer (T1) des Fahrzeug-Kommunikationsnetzwerks (1) ein Fahrzeug-Teilnehmer (T1) ist, der in dem Fahrzeug (2) angeordnet ist,
**dadurch gekennzeichnet, dass**
der Fahrzeug-Teilnehmer (T1) einen Registrierungs-Server des Fahrzeug-Kommunikationsnetzwerks (1) bildet oder bereitstellt, wobei von dem mindestens einen weiteren Teilnehmer (T2, T3, T4, T5) in einem Anmeldevorgang Informationen über eine Dienst-Kategorie mindestens eines Diensts (D3, D4, D5), der von dem weiteren Teilnehmer (T2, T3, T4, T5) bereitgestellt wird, und Informationen zu einer Dienst-Adresse (DA3, DA4, DA5) an den Registrierungs-Server übertragbar sind, wobei durch den Registrierungs-Server die teilnehmerspezifische Dienst-Kategorie und die teilnehmerspezifische Dienst-Adresse (DA3, DA4, DA5) abrufbar speicherbar sind.

9. Teilnehmer eines Fahrzeug-Kommunikationsnetzwerks (1), wobei der Teilnehmer ein Fahrzeug-Teilnehmer (T1) ist, der in dem Fahrzeug (2) angeordnet ist, wobei der Teilnehmer (T1) einen Registrierungs-Server des Fahrzeug-Kommunikationsnetzwerks (1) bildet,
wobei der Registrierungs-Server eingerichtet ist von mindestens einen weiteren Teilnehmer (T2, T3, T4, T5) des Fahrzeug-Kommunikationsnetzwerks (1) in einem Anmeldevorgang Informationen über eine Dienst-Kategorie mindestens eines Diensts (D3, D4, D5), und Informationen zu einer Dienst-Adresse (DA3, DA4, DA5) zu empfangen,
wobei durch den Registrierungs-Server eine teilnehmerspezifische Dienst-Kategorie und eine teilnehmerspezifische Dienst-Adresse (DA3, DA4, DA5) abrufbar speicherbar sind.

10. Fahrzeug, wobei das Fahrzeug (2) mindestens einen Fahrzeug-Teilnehmer (T1) eines Fahrzeug-Kommunikationsnetzwerks (1) umfasst,
wobei der Fahrzeug-Teilnehmer (T1) einen Registrierungs-Server des Fahrzeug-Kommunikationsnetzwerks (1) bildet oder in dem Fahrzeug bereitstellt,
wobei der Registrierungs-Server eingerichtet ist von mindestens einen weiteren Teilnehmer (T2, T3, T4, T5) des Fahrzeug-Kommunikationsnetzwerks (1) in einem Anmeldevorgang Informationen über eine Dienst-Kategorie mindestens eines Diensts (D3, D4, D5) und Informationen zu einer Dienst-Adresse (DA3, DA4, DA5) zu empfangen,
wobei durch den Registrierungs-Server eine teilnehmerspezifische Dienst-Kategorie und eine teilnehmerspezifische Dienst-Adresse (DA3, DA4, DA5) abrufbar speicherbar sind.

## Claims

1. Method for data transmission between at least two participants (T1, T2, T3, T4, T5) in a vehicle communication network (1) of a vehicle (2), wherein at least one participant (T1) of the vehicle communication network is a vehicle participant that is arranged in the vehicle (2),
**characterized in that**
the vehicle participant (T1) forms or provides a registration server of the vehicle communication network (1), wherein, in a registration process, the at least one further participant (T2, T3, T4, T5) transmits information about a service category of at least one service (D3, D4, D5) that is provided by the further participant (T2, T3, T4, T5) and information about a service address (AD3, AD4, AD5) to the registration server, wherein the registration server stores the participant-specific service category and the participant-specific service address (AD3, AD4, AD5) in a retrievable manner.

2. Method according to Claim 1, **characterized in that** a participant (T2) transmits a service category request to the registration server, wherein in a response the registration server transmits all the service addresses (DA3, DA4, DA5) assigned to the service category.

3. Method according to Claim 2, **characterized in that** the participant (T2) transmits a service request to at least one server participant (T3, T4) to which one of the service addresses (DA3, DA4) is assigned, wherein in a response the at least one server participant (T3) transmits information about at least one service (D3, D4) provided under this service address (DA3, DA4) to the participant (T2).

4. Method according to Claim 3, **characterized in that** the participant (T2) determines a desired service (D3) depending on the information about a provided service (D3, D4), wherein the participant (T2) transmits a service execution request to the server participant (T3) that provides the desired service (D3).

5. Method according to one of the preceding claims, **characterized in that** a service (D3, D4, D5) is assigned to a service category of lighting, media (MEDIA), doors and hatches, chassis, drive, engine (ENGINE) or a further service category.

6. Method according to one of the preceding claims, **characterized in that** the participant-specific service category and the participant-specific service address (DA3, DA4, DA5) are deleted if a participant (T3, T4, T5) transmits a deregister request to the registration server, or if no data can be transmitted between the registration server and the participant (T3, T4, T5), or if a vehicle terminal cycle is ended.

7. Method according to one of the preceding claims, **characterized in that** stateless communication takes place by means of the data transmission between participants (T1, T2, T3, T4, T5) of the vehicle communication network (1) .

8. Vehicle communication network (1) wherein the vehicle communication network (1) comprises at least two participants (T1, T2, T3, T4, T5), wherein at least one participant (T1) of the vehicle communication network (1) is a vehicle participant (T1) that is arranged in the vehicle (2),
**characterized in that**
the vehicle participant (T1) forms or provides a registration server of the vehicle communication network (1), wherein, in a registration process, the at least one further participant (T2, T3, T4, T5) can transmit information about a service category of at least one service (D3, D4, D5) that is provided by the further participant (T2, T3, T4, T5) and information about a service address (DA3, DA4, DA5) to the registration server, wherein the registration server can store the participant-specific service category and the participant-specific service address (DA3, DA4, DA5) in a retrievable manner.

9. Participant of a vehicle communication network (1), wherein the participant is a vehicle participant (T1) that is arranged in the vehicle (2), wherein the participant (T1) forms a registration server of the vehicle communication network (1), wherein the registration server is set up to receive information about a service category of at least one service (D3, D4, D5) and information about a service address (DA3, DA4, DA5) from at least one further participant (T2, T3, T4, T5) of the vehicle communication network (1) in a registration process,
wherein the registration server can store a participant-specific service category and a participant-specific service address (DA3, DA4, DA5) in a retrievable manner.

10. Vehicle, wherein the vehicle (2) comprises at least one vehicle participant (T1) of a vehicle communication network (1),
wherein the vehicle participant (T1) forms a registration server of the vehicle communication network (1) or provides it in the vehicle,
wherein the registration server is set up to receive information about a service category of at least one service (D3, D4, D5) and information about a service address (DA3, DA4, DA5) from at least one further participant (T2, T3, T4, T5) of the vehicle communication network (1) in a registration process,
wherein the registration server can store a participant-specific service category and a participant-specific service address (DA3, DA4, DA5) in a retrievable manner.

## Revendications

1. Procédé de transmission de données entre au moins deux utilisateurs (T1, T2, T3, T4, T5) dans un réseau de communication de véhicule (1) d'un véhicule (2), dans lequel au moins un utilisateur (T1) du réseau de communication de véhicule est un utilisateur de véhicule situé dans le véhicule (2),
**caractérisé en ce que** l'utilisateur de véhicule (T1) forme ou fournit un serveur d'enregistrement du réseau de communication de véhicule (1), dans lequel ledit au moins un autre utilisateur (T2, T3, T4, T5) transmet au serveur d'enregistrement, dans un processus de demande, des informations sur une catégorie de service d'au moins un service (D3, D4, D5) fourni par l'autre utilisateur (T2, T3, T4, T5) et des informations sur une adresse de service (AD3, AD4, AD5), dans lequel le serveur d'enregistrement mémorise de manière récupérable la catégorie de service spécifique à l'utilisateur et l'adresse de service (AD3, AD4, AD5) spécifique à l'utilisateur.

2. Procédé selon la revendication 1, **caractérisé en ce qu'**un utilisateur (T2) transmet une demande de catégorie de service au serveur d'enregistrement, dans lequel le serveur d'enregistrement transmet dans une réponse toutes les adresses de service (DA3, DA4, DA5) associées à la catégorie de service.

3. Procédé selon la revendication 2, **caractérisé en ce que** l'utilisateur (T2) transmet une demande de service à au moins un utilisateur de serveur (T3, T4) auquel est associée l'une des adresses de service (DA3, DA4), dans lequel ledit au moins un utilisateur de serveur (T3) transmet à l'utilisateur (T2), dans une réponse, des informations sur au moins un service (D3, D4) fourni à ladite adresse de service (DA3, DA4).

4. Procédé selon la revendication 3, **caractérisé en ce que** l'utilisateur (T2) détermine un service (D3) souhaité en fonction des informations sur un service (D3, D4) fourni, dans lequel l'utilisateur (T2) transmet une demande d'exécution de service à l'utilisateur de serveur (T3) qui fournit le service (D3) souhaité.

5. Procédé selon l'une des revendications précédentes, **caractérisé en ce qu'**un service (D3, D4, D5) est associé à une catégorie de service telle que : éclairage, multimédia (MEDIA), portes et volets, châssis, entraînement, moteur (ENGINE), ou à une autre catégorie de service.

6. Procédé selon l'une des revendications précédentes, **caractérisé en ce que** la catégorie de service spécifique à l'utilisateur et l'adresse de service (DA3, DA4, DAS) spécifique à l'utilisateur sont supprimées lorsqu'un utilisateur (T3, T4, T5) transmet une demande de déconnexion au serveur d'enregistrement ou lorsqu'aucune donnée ne peut être transmise entre le serveur d'enregistrement et l'utilisateur (T3, T4, T5) ou lorsqu'un cycle d'arrêt du véhicule est terminé.

7. Procédé selon l'une des revendications précédentes, **caractérisé en ce qu'**une communication sans état est effectuée au moyen d'une transmission de données entre des utilisateurs (T1, T2, T3, T4, T5) du réseau de communication de véhicule (1).

8. Réseau de communication de véhicule (1), dans lequel le réseau de communication de véhicule (1) comprend au moins deux utilisateurs (T1, T2, T3, T4, T5), dans lequel au moins un utilisateur (T1) du réseau de communication de véhicule (1) est un utilisateur de véhicule (T1) situé dans le véhicule (2),
**caractérisé en ce que** l'utilisateur de véhicule (T1) forme ou fournit un serveur d'enregistrement du réseau de communication de véhicule (1), dans lequel des informations sur une catégorie de service d'au moins un service (D3, D4, D5) fourni par ledit au moins un autre utilisateur (T2, T3, T4, T5) sont fournies par l'autre utilisateur (T2, T3, T4, T5) dans un processus de demande, et des informations sur une adresse de service (DA3, DA4, DA5) peuvent être transmises au serveur d'enregistrement, dans lequel la catégorie de service spécifique à l'utilisateur et l'adresse de service (DA3, DA4, DA5) spécifique à l'utilisateur peuvent être mémorisées de manière récupérable par le serveur d'enregistrement.

9. Utilisateur d'un réseau de communication de véhicule (1), dans lequel l'utilisateur est un utilisateur de véhicule (T1) situé dans le véhicule (2), dans lequel l'utilisateur (T1) forme un serveur d'enregistrement du réseau de communication de véhicule (1), dans lequel le serveur d'enregistrement est conçu pour recevoir en provenance d'au moins un autre utilisateur (T2, T3, T4, T5) du réseau de communication de véhicule (1), dans un processus de demande, des informations sur une catégorie de service d'au moins un service (D3, D4, D5) et des informations sur une adresse de service (DA3, DA4, DA5), dans lequel une catégorie de service spécifique à l'utilisateur et une adresse de service (DA3, DA4, DA5) spécifique à l'utilisateur peuvent être mémorisées de manière récupérable par le serveur d'enregistrement.

10. Véhicule, dans lequel le véhicule (2) comprend au moins un utilisateur de véhicule (T1) d'un réseau de communication de véhicule (1),
dans lequel l'utilisateur de véhicule (T1) forme ou fournit dans le véhicule un serveur d'enregistrement du réseau de communication de véhicule (1),
dans lequel le serveur d'enregistrement est conçu pour recevoir en provenance d'au moins un autre utilisateur (T2, T3, T4, T5) du réseau de communication de véhicule (1), dans un processus de demande, des informations sur une catégorie de service d'au moins un service (D3, D4, D5) et des informations sur une adresse de service (DA3, DA4, DA5),
dans lequel une catégorie de service spécifique à l'utilisateur et une adresse de service (DA3, DA4, DA5) spécifique à l'utilisateur peuvent être mémorisées de manière récupérable par le serveur d'enregistrement.
